# DEMANDE DE BREVET EUROPEEN

(11) **EP 4 477 518 A1**
(43) Date de publication de la demande: **18.12.2024**
(21) Numéro de dépôt: 24181799.8
(22) Date de dépôt: 12.06.2024
(51) Int. Cl.: B62K 27/00, B62K 27/12, B62B 1/00

(54) **PROCÉDÉ POUR TRANSFORMER UNE REMORQUE POUR VÉLO, D'UN MODE REMORQUE À VÉLO EN UN MODE CHARIOT, ET REMORQUE POUR VÉLO EN FAISANT APPLICATION**

(30) Priorité: 13.06.2023 FR 2305973
(71) Demandeur: Joker Bike, 69100 Villeurbanne (FR)
(72) Inventeur: SUCHET, Jordan, 69001 LYON (FR); CASTANHOLA, Kervin, 69560 SAINTE-COLOMBE (FR)
(74) Mandataire: Cabinet Beau de Loménie

(57) **Abrégé**

L'invention concerne une remorque pour vélo comportant:
- un châssis (19) équipé d'au moins une paire de roues (21);
- une béquille (25) montée sur le châssis (19) pour être déplacée entre une position stable repliée et une position stable déployée pour laquelle les roues (21) et l'extrémité libre (25a) de la béquille (25) définissent un plan d'appui béquille (P_{B});
- un timon (29) présentant une extrémité pourvue d'au moins une roulette (31), le timon étant monté par une liaison pivot (32) sur le châssis pour occuper au moins une position stable en mode remorque à vélo et une position stable en mode chariot pour laquelle les roues et la ou les roulettes définissent un plan d'appui timon (P_{T}), le timon (29) étant configuré de manière que, lors de son pivotement pour passer de sa position stable en mode remorque à vélo à sa position stable en mode chariot, la ou les roulettes (31) viennent en contact avec la surface de roulement pour soulever le châssis de manière qu'en position stable en mode remorque, le plan d'appui timon (P_{T}) soit plus éloigné du châssis que le plan d'appui béquille (P_{B}).

## Description

### Domaine Technique

L'objet de l'invention concerne le domaine technique des remorques destinées à être tractées par un vélo et adaptées pour le transport de charges de diverses natures telles que des marchandises et/ou des animaux et/ou des personnes.

L'objet de l'invention vise plus précisément une remorque pour vélo qui est conçue pour être convertible entre un mode remorque à vélo pour lequel la remorque est attachée au vélo et un mode chariot pour lequel la remorque est détachée du vélo et transformée pour être déplacée sans l'usage du vélo.

### Technique antérieure

L'état de la technique a proposé de nombreuses solutions techniques de remorques pour vélo. D'une manière générale, une remorque pour vélo comporte un châssis aménagé pour délimiter une plateforme de transport de charges équipée de divers accessoires en fonction de la nature de la charge à transporter. Ce châssis est équipé d'au moins une paire de roues montées en liaison pivot sur le châssis pour rouler sur une surface de roulement. Ce châssis est pourvu d'un timon présentant une extrémité libre munie d'un système d'accrochage au vélo. L'accrochage du timon au vélo permet une utilisation de la remorque selon un mode remorque à vélo.

Dans de nombreuses applications, il apparait le besoin, après le décrochage de la remorque du vélo, de transférer ou de déplacer la charge supportée par la remorque. L'art antérieur a ainsi proposé de convertir la remorque à vélo pour l'utiliser en mode chariot.

Ainsi, par exemple, le brevet FR3021024 décrit une remorque à vélo dont le châssis est pourvu de tiges munies de roulettes et déplaçables verticalement pour, lorsque la remorque est détachée du vélo, venir en contact avec le sol de manière qu'en combinaison avec les roues de la remorque, le roulement stable de la remorque soit assuré. Une telle solution limite l'accès à la plateforme de transport, ce qui rend difficile les opérations de chargement et de déchargement de la remorque. Par ailleurs, la transformation de cette remorque pour passer de son mode remorque à vélo à son mode chariot nécessite diverses interventions ne permettant pas une conversion rapide et simple.

Le brevet US 5454577 décrit une autre solution pour laquelle le timon est pourvu de roulettes à son extrémité opposée à celle munie du système d'accrochage au vélo. Le timon est monté en liaison pivot sur le châssis pour occuper une position stable en mode remorque à vélo. Le timon peut être pivoté pour permettre de passer à une position stable en mode chariot pour laquelle les roues et les roulettes roulent sur le sol. Le document DE 202006008175 décrit également une remorque à vélo pourvu d'un timon muni d'une roulette. Le timon est monté en liaison pivot de sorte que son pivotement permet de passer de la position en mode remorque à vélo à la position en mode chariot. Il est à noter que la transformation de la remorque pour passer de la position en mode remorque à vélo à la position en mode chariot nécessite un effort important dû à la charge embarquée. De même, lors du décrochage de la remorque du vélo pour convertir son utilisation en mode chariot, un effort important doit être développé pour maintenir stable la charge embarquée.

### Exposé de l'invention

L'objet de l'invention vise à remédier aux inconvénients de l'art antérieur en proposant une remorque pour vélo qui est conçue pour être transformée rapidement et facilement entre un mode remorque à vélo et un mode chariot, tout en ne limitant pas l'accès à la plateforme de chargement.

Pour atteindre de tels objectifs, l'objet de l'invention propose une remorque à vélo comportant :
- un châssis équipé d'au moins une paire de roues montées en liaison pivot avec le châssis pour rouler sur une surface de roulement, le châssis présentant une plateforme de chargement délimitant un plan d'appui remorque;
- une béquille présentant une extrémité libre, apte à être positionnée à une distance verticale prédéterminée du châssis, cette béquille étant montée sur le châssis pour être déplacée entre une position stable repliée et une position stable déployée pour laquelle les roues et l'extrémité libre de la béquille définissent un plan d'appui béquille ;
- un timon présentant une première extrémité pourvue d'un système d'accrochage au vélo et une deuxième extrémité pourvue d'au moins une roulette, le timon étant monté par une liaison pivot sur le châssis pour occuper au moins une position stable en mode remorque à vélo et une position stable en mode chariot pour laquelle les roues et la ou les roulettes définissent un plan d'appui timon, le timon étant configuré de manière que, lors de son pivotement pour passer de sa position stable en mode remorque à vélo à sa position stable en mode chariot, la ou les roulettes viennent en contact avec la surface de roulement pour soulever le châssis de manière qu'en position stable en mode remorque, le plan d'appui timon soit plus éloigné du châssis que le plan d'appui béquille.

Selon une variante avantageuse de réalisation, le timon et la béquille sont configurés de manière qu'en position stable du timon en mode chariot, le plan d'appui timon et le plan d'appui béquille forment entre eux un angle strictement supérieur à 0°.

Selon une autre variante avantageuse de réalisation, le timon et la béquille sont configurés de manière qu'en position stable du timon en mode remorque à vélo, le plan d'appui béquille forme avec la surface de roulement pour la remorque et le vélo, un angle strictement supérieur à 0°.

De préférence, le timon est monté en liaison pivot sur le châssis pour occuper une position stable repliée contre le châssis.

Avantageusement, la remorque comporte un système commandé de blocage du pivotement du timon piloté par une commande permettant de déverrouiller le timon pour assurer son pivotement et de verrouiller le timon dans au moins la position stable en mode remorque à vélo et la position stable en mode chariot.

Selon une caractéristique de mise en oeuvre, le timon est monté en liaison pivot sur le châssis pour occuper au moins une position stable repliée et le système commandé de blocage du pivotement du timon permettant de déverrouiller le timon pour assurer son pivotement et de verrouiller le timon dans sa position stable repliée.

De préférence, le timon est pourvu à l'opposé de sa deuxième extrémité, d'une poignée de manipulation.

Un autre objet de l'invention est de proposer un procédé pour transformer une remorque pour vélo, d'un mode remorque à vélo en un mode chariot. Selon un tel objet, le procédé vise:
- à mettre à disposition une remorque pour un vélo comportant :
   * un châssis équipé d'au moins une paire de roues montées en liaison pivot avec le châssis pour rouler sur une surface de roulement;
   * une béquille présentant une extrémité libre apte à être positionnée à une distance verticale prédéterminée du châssis, cette béquille étant montée sur le châssis pour être déplacée entre une position stable repliée et une position stable déployée pour laquelle les roues et l'extrémité libre de la béquille définissent un plan d'appui béquille;
   * un timon présentant une première extrémité pourvue d'un système d'accrochage au vélo et une deuxième extrémité pourvue d'au moins une roulette, le timon étant monté par une liaison pivot sur le châssis pour occuper au moins une position stable en mode remorque à vélo et une position stable en mode chariot pour laquelle les roues et la ou les roulettes définissent un plan d'appui timon
- pour passer d'un mode remorque à vélo pour lequel le timon est accroché au vélo tandis que la béquille est dans sa position stable repliée, à un mode chariot :
   * à mettre à l'arrêt et à stabiliser le vélo ;
   * à faire pivoter la béquille pour la positionner dans sa position stable déployée ;
   * à décrocher le timon du vélo de sorte que la remorque est supportée par la béquille et les roues;
   * à faire pivoter le timon de manière que la ou les roulettes viennent en contact avec la surface de roulement pour soulever le châssis de manière qu'en position stable en mode chariot, la remorque se trouve supportée par les roues et la roulette ou les roulettes tandis que la béquille peut être déplacée;
   * à déplacer la béquille pour la positionner dans sa position stable repliée.

Pour passer une remorque à vélo, d'un mode chariot, à un mode remorque à vélo, le procédé vise :
* à faire pivoter la béquille pour la positionner dans sa position stable déployée ;
* à faire pivoter le timon de manière que la ou les roulettes ne soient plus en contact avec la surface de roulement et jusqu'à ce que la remorque se trouve supportée par la béquille et les roues;
* à bloquer le timon dans sa position stable en mode remorque à vélo ;
* à accrocher le timon au vélo;
* et à déplacer la béquille pour la positionner dans sa position stable repliée.

Avantageusement, pour bloquer le timon dans sa position stable en mode remorque à vélo, on soulève la liaison pivot du timon.

### Brève description des dessins

[Fig. 1A] La figure 1A est une vue en perspective d'un exemple de réalisation d'une remorque conforme à l'invention utilisée en mode remorque à vélo.
[Fig. 1B] La figure 1B illustre dans un plan en vue de côté, la remorque conforme à l'invention utilisée en mode remorque à vélo et représentée à la figure 1A.
[Fig. 1C] La figure 1C illustre dans un plan en vue de côté, la remorque conforme à l'invention utilisée en mode remorque à vélo, en position arrêtée et prête à être détachée du vélo.
[Fig. 2A] La figure 2A est une vue en perspective de la remorque conforme à l'invention en position détachée du vélo.
[Fig. 2B] La figure 2B illustre dans un plan en vue de côté, la remorque conforme à l'invention en position détachée du vélo, reposant sur un plan d'appui béquille.
[Fig. 2C] La figure 2C illustre dans un plan en vue de dessous, la remorque conforme à l'invention en position détachée du vélo, illustrée à la figure 2B.
[Fig. 3A] La figure 3A est une vue en perspective de la remorque conforme à l'invention en position redressée du timon.
[Fig. 3B] La figure 3B illustre dans un plan en vue de côté, la remorque conforme à l'invention en position redressée du timon illustrée à la figure 3A.
[Fig. 3C] La figure 3C illustre dans un plan en vue de côté, la remorque conforme à l'invention en position mode chariot.
[Fig. 4A] La figure 4A est une vue dans un plan en vue de côté, de la remorque conforme à l'invention en position repliée.
[Fig.4B] La figure 4B est une vue dans un plan en vue de côté, de la remorque conforme à l'invention en position de stockage.
[Fig. 5] La figure 5 est une vue en perspective de la remorque conforme à l'invention illustrant à plus grande échelle un détail du système commandé de blocage du pivotement du timon.

### Description des modes de réalisation

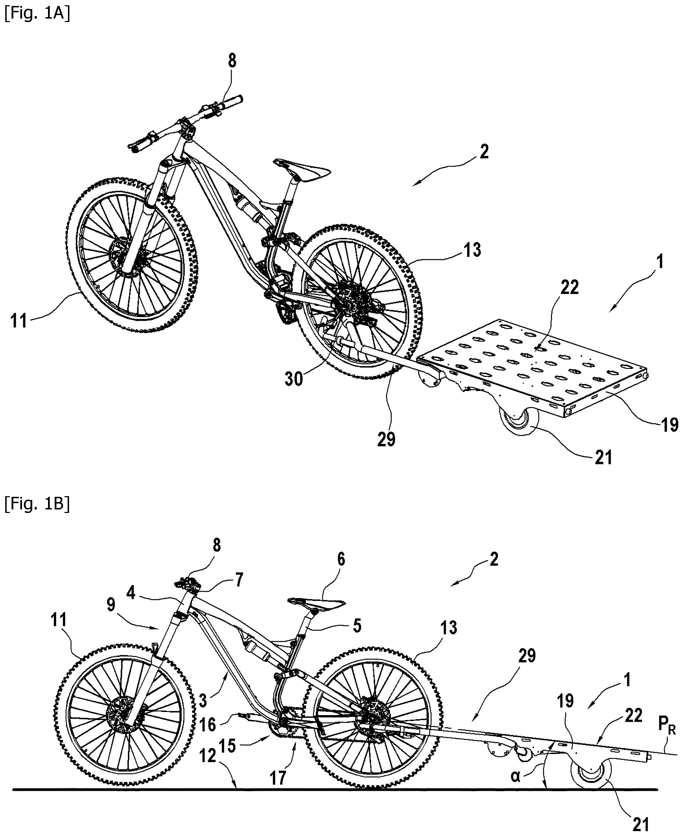

Tel que cela ressort des dessins, l'objet de l'invention concerne une remorque 1 pour un vélo 2 de tous types connus en soi. Cette remorque 1 est conçue pour être soit attachée au vélo 2 en vue d'être utilisable dans une première position stable en mode remorque à vélo ou soit être transformée, lorsqu'elle est détachée du vélo, en vue d'être utilisable dans une deuxième position stable en mode chariot pour laquelle la remorque peut être déplacée facilement sans l'usage du vélo. Dans l'exemple illustré aux figures 1A à 1C, le vélo 2 comporte un cadre 3 configuré pour présenter une colonne de direction 4 pour un train avant et une tige 5 de réception d'une selle 6. Un pivot de direction 7 qui est inséré dans la colonne de direction 4 est équipé d'une potence qui est elle-même munie d'un guidon 8 permettant de diriger le vélo. Le pivot de direction 7 est muni d'une fourche 9 sur laquelle est montée en liaison pivot, une roue avant 11 qui est destinée à être contact avec une surface de roulement 12 telle que le sol.

Le vélo 2 comporte au moins une roue arrière 13 montée en liaison pivot sur le cadre 3 et destinée à être contact avec la surface de roulement 12. Le cadre 3 est aménagé pour supporter un pédalier 15 présentant des axes de rotation pour des pédales 16 transmettant leur mouvement à la roue arrière 13 par l'intermédiaire d'un système de transmission 17, typiquement à chaîne. Sur les différentes figures, le vélo 2 est pourvu d'une seule roue arrière 13 mais il est clair que l'objet de l'invention s'applique également pour un vélo de type tricycle comportant par exemple deux roues arrière.

La remorque 1 conforme à l'invention comporte un châssis 19 équipé d'au moins une paire de roues 21 montées en liaison pivot avec le châssis pour rouler sur la surface de roulement 12. De manière classique, le châssis 19 présente une plateforme de chargement 22, délimitant par sa face supérieure, un plan d'appui remorque P_{R}. Par exemple, le châssis 19 est réalisé par une plaque de forme rectangulaire délimitée par deux bords longitudinaux 19a raccordés par deux bords transversaux 19b, appelé avant et arrière par rapport au sens d'avancement de la remorque en mode remorque à vélo. Bien entendu, la plateforme de chargement 22 peut être réalisée différemment en fonction des applications visées et être équipée de divers accessoires en fonction de la nature de la charge à transporter.

Dans l'exemple de réalisation illustré sur les dessins, la remorque 1 est munie de deux roues 21 positionnées au niveau des bords longitudinaux du châssis 19, sensiblement au tiers de la longueur de ce châssis pris à partir du bord transversal 19b arrière de ce châssis. Avantageusement, les roues 21 sont de petit diamètre afin d'être positionnées au-dessous du châssis 19 afin que la charge puisse dépasser du châssis sans conflits avec les roues 21. Bien entendu, la remorque 1 peut être équipée de roues possédant un diamètre plus grand et positionnées différemment sur le châssis.

Il est à noter qu'en position de la remorque accrochée au vélo, le plan d'appui remorque P_{R} délimite avec le plan passant par les points de contact des roues 11, 13 du vélo et les roues 21 de la remorque (plan délimitant la surface de roulement 12), un angle alpha compris par exemple entre 0° et 20°.

La remorque 1 comporte également une béquille 25 présentant une extrémité libre 25a apte à être positionnée à une distance verticale prédéterminée du châssis 19. Cette béquille 25 est montée sur le châssis 19 pour être déplacée entre une position stable repliée (figures 1A, 1B, 3C, 4B) et une position stable déployée (1C, 2A, 2B, 3A, 3B, 4A) pour laquelle les roues 21 et l'extrémité libre 25a de la béquille 25 définissent un plan d'appui béquille P_{B}. Dans l'exemple de réalisation illustré, la béquille 25 est montée autour d'un axe de rotation 25b s'étendant transversalement à partir de la face inférieure du châssis, en étant guidé en rotation à chacune de ses extrémités par des paliers 26. Cet axe de rotation 25b est pourvu de deux jambes 25c présentant chacune une extrémité libre 25a destinée à venir en appui sur la surface de roulement 12 comme cela sera décrit plus précisément dans la suite de la description. Bien entendu, les jambes 25c qui peuvent être munies de patins d'appui présentent des longueurs sensiblement identiques. En position stable déployée, les roues 21 de la remorque et les extrémités libres 25a de la béquille délimitent le plan d'appui béquille P_{B} formant un angle béta avec plan d'appui remorque P_{R}, compris par exemple entre -30° et un angle strictement inférieur à 0°.

Dans l'exemple de réalisation décrit en relation des figures, la béquille 25 est montée pivotante sur le châssis 19 autour d'un axe de rotation. Bien entendu, le déplacement de la béquille 25 entre sa position stable repliée et sa position stable déployée peut être autre qu'une rotation comme une translation, une rotation à double axe, etc. Dans la description qui suit, le mouvement de déplacement est un mouvement de pivotement ou de rotation mais il clair que le mouvement de déplacement de la béquille peut être différent.

Selon l'exemple de réalisation illustré, cette béquille 25 est donc montée sur le châssis par une liaison pivot avec butée pour occuper une position stable repliée sous la face inférieure du châssis 19 et une position stable déployée, pour laquelle les jambes 25c s'étendent en saillie à partir de la face inférieure du châssis, dans une position de butée prédéterminée. Par exemple, la position stable déployée de la béquille 25 est assurée par des saillies 25d portées pas les jambes 25c et venant en butée, en position déployée des jambes, sur une surface d'arrêt 25e aménagée dans les bords longitudinaux 19a du châssis. La béquille 25 peut être sollicitée pour occuper sa position stable déployée et sa position stable repliée par un système à ressort ou par tout autre système tel que par goupille par exemple. Avantageusement, la béquille 25 est du type à actionnement manuelle. Typiquement, la béquille 25 est manoeuvrée par le pied d'un utilisateur pour la déployer ou la replier sous le châssis. Bien entendu, la mise en mouvement de la béquille peut être réalisée de toute manière appropriée. Il est à noter que le mouvement de la béquille 25 peut être motorisé pour assurer son déplacement automatique sous l'action d'une commande.

Selon une autre caractéristique de l'invention, la remorque 1 comporte un timon 29 présentant une première extrémité pourvue d'un système d'accrochage 30 au vélo 2. De manière classique, le système d'accrochage 30 est de tous types connus en soi pour permettre la fixation et la désolidarisation du timon 29 par rapport au vélo. Par exemple, le système d'accrochage 30 est une fixation désignée par la dénomination commerciale « weber » qui vient se fixer au niveau de la liaison pivot de la roue arrière 13. Le timon 29 est donc amovible par rapport au vélo tout en restant solidaire de la remorque 1. Le timon 29 présente une deuxième extrémité opposée à la première extrémité, pourvue d'au moins une roulette, et dans l'exemple illustré, de deux roulettes 31. Par exemple, les roulettes 31 sont des petites roues folles.

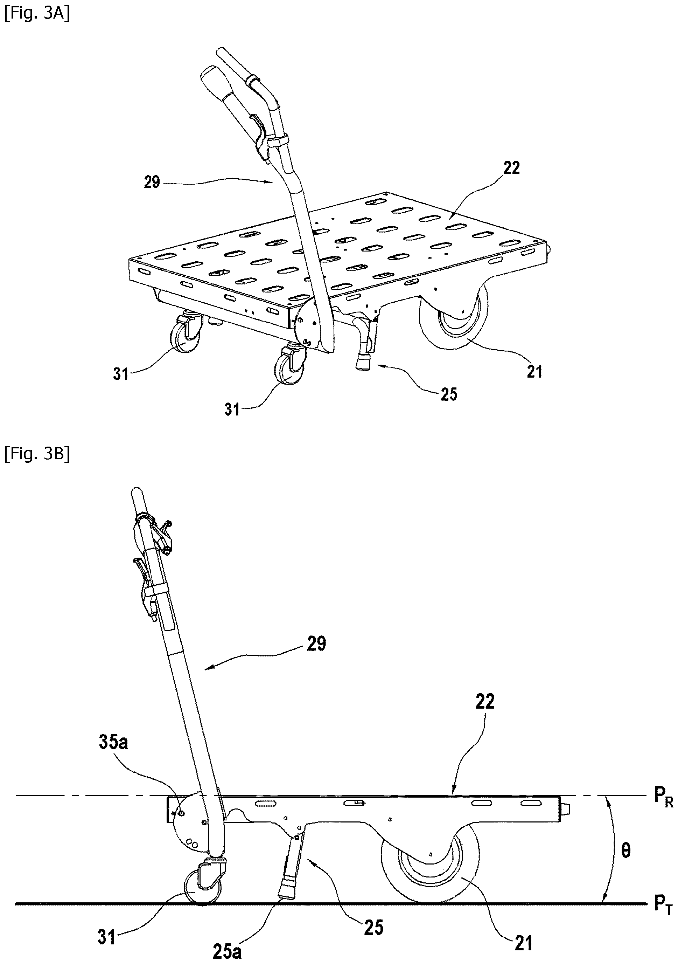

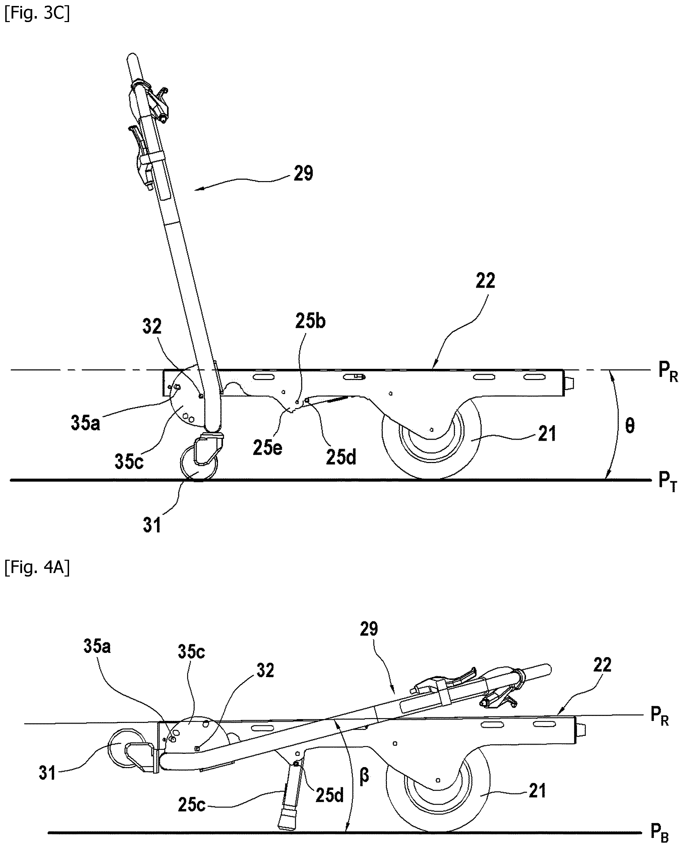

Par convention, il est à noter que lorsque la remorque 1 occupe sa position stable en mode chariot (figure 3C), les roues 21 et les roulettes 31 définissent un plan d'appui timon P_{T}. Lorsque que la remorque 1 roule sur une surface de roulement 12, ce plan d'appui timon P_{T} est sensiblement parallèle avec le plan de roulement défini par cette surface de roulement. Par exemple, le plan d'appui timon P_{T} et le plan d'appui remorque P_{R}, délimitent entre un angle téta compris par exemple entre -20° et + 20°.

Selon une caractéristique de l'invention, le timon 29 et la béquille 25 sont configurés de manière qu'en position stable du timon en mode chariot (figure 3B, 3C), le plan d'appui timon P_{T} et le plan d'appui béquille P_{B} forment entre eux un angle strictement supérieur à 0 °. Il est rappelé que le plan d'appui timon P_{T} et le plan d'appui béquille P_{B} ont comme point commun, le point de contact des roues 21 de sorte que l'angle entre le plan d'appui timon P_{T} et le plan d'appui béquille P_{B} est strictement supérieur à 0° si la béquille 25 ne touche pas le plan d'appui timon P_{T}. Comme cela sera mieux compris dans la suite de la description, cette position écartée de la béquille 25 par rapport au plan d'appui timon permet un repliement ou un déploiement sans effort de la béquille. Typiquement, la béquille 25 et plus précisément son extrémité libre se trouve positionnée à quelques mm voire cm du plan d'appui timon P_{T} dans sa position déployée, comme cela est illustré à la figure 3B.

Conformément à l'invention, le timon 29 est monté par une liaison pivot 32 sur le châssis 19 pour occuper au moins la position stable en mode remorque à vélo et la position stable en mode chariot. Le timon 29 est donc articulé autour d'un axe s'étendant transversalement par rapport au châssis 19 et sensiblement perpendiculairement au plan vertical de manière à pouvoir pivoter selon la direction avant et arrière de la remorque. Avantageusement, le timon 29 est monté sur le châssis 19 pour pivoter dans un plan situé à l'extérieur de l'un des bords longitudinaux 19a du châssis 19 et à proximité de ce bord longitudinal.

Dans l'exemple illustré, le timon 29 comporte un bras principal 29a sensiblement rectiligne dans la direction avant arrière de la remorque et positionné à l'extérieur d'un bord longitudinal 19a et se prolongeant selon un angle déterminé en direction de l'autre bord longitudinal, par un bras secondaire 29b pourvu à son extrémité libre, du système d'accrochage 30. Ce bras principal 29a se prolonge, à l'opposé du bras secondaire 29b, par une traverse 29c s'étendant transversalement par rapport au châssis 19 et jusqu'à l'autre bord longitudinal. Les roulettes 31 sont montées sur cette traverse 29c. L'extrémité libre de cette traverse 29c ainsi que le bras principal 29a sont guidés en rotation au niveau des deux bords longitudinaux 19a du châssis pour constituer la liaison pivot 32.

Il est à noter que le timon 29 comporte avantageusement, une poignée de manipulation 29d. Dans l'exemple illustré, la poignée de manipulation 29d comporte un premier segment rectiligne 29e s'étendant sensiblement dans le prolongement du bras principal 29a et un deuxième segment 29f prolongeant sensiblement à l'équerre le premier segment en étant orienté vers l'extrémité du bras secondaire 29b. Par exemple, ce deuxième segment 29f est pourvu d'une poignée 29g de frein de parking agissant sur les roues 21 de la remorque 1.

Conformément à l'invention, le timon 29 est configuré de manière que, lors de son pivotement pour passer de sa position stable en mode remorque à vélo (figure 1B) à sa position stable en mode chariot (figures 3B et 3C), la ou les roulettes 31 viennent en contact avec la surface de roulement 12 pour soulever le châssis 19 de manière qu'en position stable en mode remorque, le plan d'appui timon P_{T} soit plus éloigné du châssis 19 que le plan d'appui béquille P_{B} en vue d'assurer le pivotement de la béquille 25. Dans cette position stable en mode remorque (figure 3B), la béquille 25 ne se trouve plus en appui sur la surface de roulement 12 de sorte qu'elle peut être repliée sans effort (figure 3C). En d'autres termes, la béquille 25 n'est plus en contact avec la surface de roulement de sorte que le timon 29 et la béquille 25 sont configurés de manière qu'en position stable du timon en mode chariot, le plan d'appui timon et le plan d'appui béquille forment entre eux un angle strictement supérieur à 0°. Typiquement, la béquille 25 et plus précisément son extrémité libre 25a se trouve positionnée à quelques mm voire cm du plan d'appui timon P_{T}. Il doit être compris qu'en mode remorque à vélo, la remorque est supportée uniquement par les roues 21 et la ou les roulettes 31.

Il est à noter qu'en position stable en mode remorque à vélo (figure 1B), le timon 29 s'étend à l'avant du châssis en faisant un faible angle par rapport à la surface de roulement 12 typiquement de 0° à 20°. Dans la position stable en mode chariot (figures 3B et 3C), le timon 29 s'élève en hauteur pour permettre sa préhension et notamment par la poignée de manipulation 29d. Dans la position stable en mode chariot illustrée sur les dessins, le timon 29 occupe une position inclinée vers l'avant de la remorque. Bien entendu, dans sa position stable en mode chariot, le timon peut occuper une position plus ou moins verticale en fonction de la forme présentée par le timon (plus ou moins 30° par exemple par rapport à la verticale). Pour passer de la position stable en mode remorque à vélo à la position stable en mode chariot, le timon 29 est pivoté sur une plage par exemple comprise entre 45° et 130° et notamment de l'ordre de 90°. Il est à noter que la plage angulaire de pivotement du timon 29 peut être en dehors de la plage donnée ci-dessus en fonction de la configuration de la remorque.

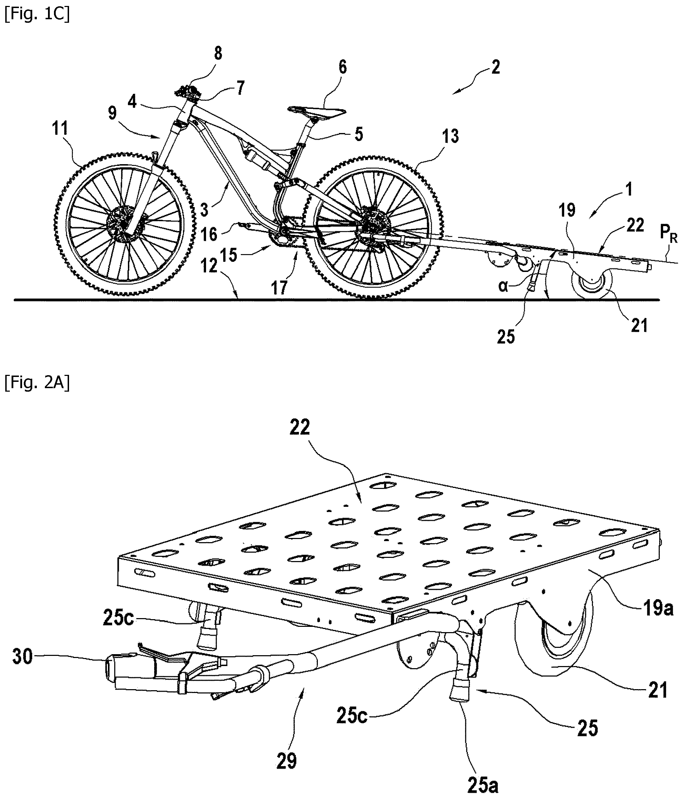

Selon une autre caractéristique de l'invention, le timon 29 et la béquille 25 sont configurés de manière qu'en position stable du timon en mode remorque à vélo (figure 1B, 1C), le plan d'appui béquille P_{B} forme avec la surface de roulement 12 pour la remorque et le vélo, un angle strictement supérieure à 0°. Par convention, les roues avant 11 et arrière 13 du vélo et les roues 21 de la remorque définissent par leurs points de contact avec la surface de roulement 12, un plan de roulement formant avec le plan d'appui béquille P_{B} un angle strictement supérieure à 0°. Il s'ensuit que dans cette position stable du timon en mode remorque à vélo, la béquille 25 n'est pas en appui sur la surface de roulement 12 de sorte qu'elle peut être repliée sans effort (figure 1C).

Selon une caractéristique avantageuse de réalisation, le timon 29 est monté en liaison pivot sur le châssis 19 pour occuper une position stable repliée contre le châssis 19 (figure 4A). Dans cette position, le bras principal 29a du timon 29 vient en butée contre la face supérieure de la surface de chargement du châssis.

Conformément à une caractéristique de l'invention, la remorque 1 comporte un système commandé de blocage 35 du pivotement du timon 29 piloté par une commande 36 permettant de déverrouiller le timon pour assurer son pivotement et de verrouiller le timon dans au moins la position stable en mode remorque à vélo et la position stable en mode chariot. Avantageusement, le système commandé de blocage 35 du pivotement du timon permet de verrouiller et de déverrouiller le timon 29, également dans sa position stable repliée.

Il doit être compris qu'un tel système commandé de blocage 35 est conçu pour d'une part, bloquer le pivotement du timon 29 dans différentes positions d'utilisation de la remorque et d'autre part, déverrouiller la rotation pour passer d'une position d'utilisation de la remorque à une autre position d'utilisation. Un tel système commandé de blocage 35 peut être réalisé de toute manière appropriée. Ce système commandé de blocage 35 peut être ainsi actionné manuellement, électriquement ou automatiquement.

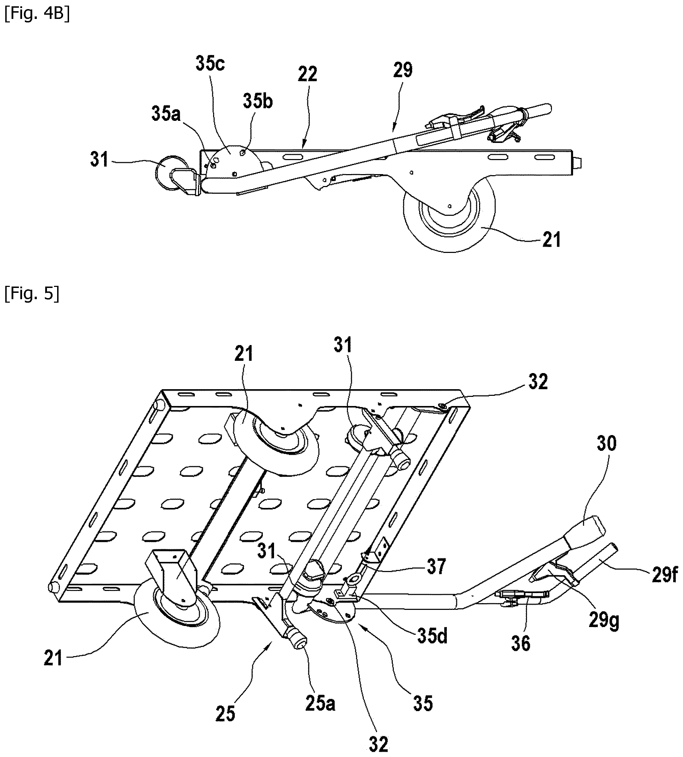

Dans l'exemple de réalisation illustré à la figure 5, le système commandé de blocage 35 est actionné manuellement par la commande 36. Un tel système commandé de blocage 35 comporte un organe d'indexage de type goupille 35a destiné à s'engager dans des trous d'indexage 35b définissant chacun la position de verrouillage du timon 29. Ces trous d'indexage 35b sont aménagés sur une platine 35c montée solidaire du timon 29 (figure 4B). Ces trous d'indexage 35b sont distribués sur une trajectoire circulaire centrée sur l'axe de rotation du timon de manière que l'organe d'indexage 35a monté de manière fixe sur le châssis 19, puisse s'engager dans l'un de ses trous en fonction de la position prise par le timon. De préférence, l'organe d'indexage 35a est sollicité en permanence contre la platine 35b à l'aide d'un système à ressort. L'organe d'indexage 35a est relié par un câble 37, à la commande 36 tel qu'une poignée de type frein à vélo fixée sur le bras secondaire du timon 29. Une action sur la commande 36 conduit à une traction sur le câble entrainant le dégagement de l'organe d'indexage 35a du trou d'indexage 35b. Le timon 29 est ainsi déverrouillé permettant son pivotement jusqu'à une position où l'organe d'indexage 35a pénètre automatiquement dans un trou d'indexage 35b.

Le procédé pour transformer cette remorque 1 pour vélo de manière à passer d'un mode d'utilisation de remorque à vélo en un mode chariot, et inversement, découle directement de la description qui précède.

Le procédé selon l'invention vise à mettre à disposition une remorque 1 pour vélo comportant les caractéristiques techniques décrites ci-dessus.

La description qui suit décrit la méthode de transformation de la remorque pour passer d'un mode remorque à vélo à un mode chariot. Lorsque la remorque 1 est utilisée en mode remorque à vélo, le timon 29 est accroché au vélo 2 et la béquille 25 est dans sa position stable repliée (figure 1B). Lorsque le vélo atteint son site de déchargement, l'utilisateur met le vélo à l'arrêt et le stabilise de sorte que l'ensemble remorque-vélo est en position d'équilibre stable.

Ensuite, la béquille 25 est pivotée pour la positionner dans sa position stable déployée (figure 1C). Selon l'exemple de réalisation illustré sur les dessins, l'utilisateur enclenche par son pied, la béquille 25 qui se déploie sans toucher la surface de roulement 12 tout en restant proche de cette surface.

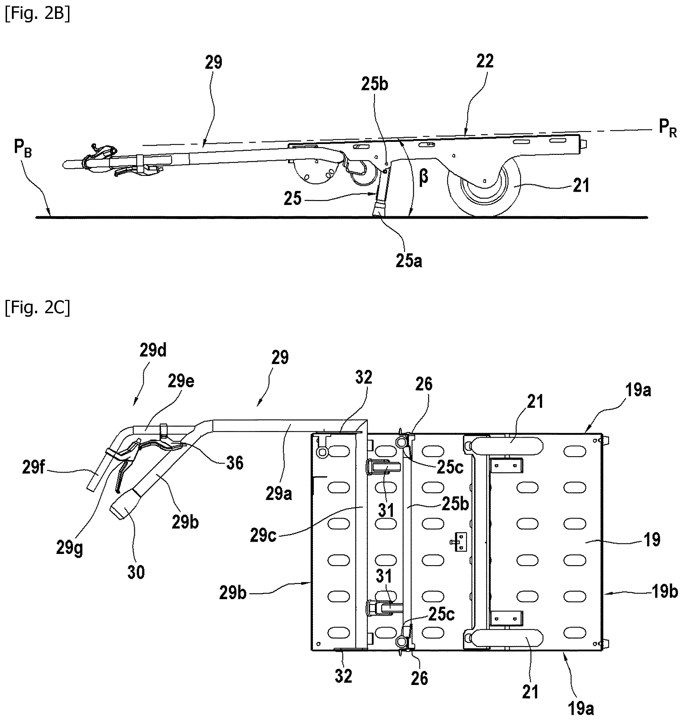

L'étape suivante consiste à décrocher le timon 29 du vélo 2 par le système d'accrochage 30. Le décrochage du timon 29 par l'utilisateur conduit la remorque à tomber sur la béquille 25, par effet de gravité. La chute est très courte et le choc est très faible compte tenu de la proximité de la béquille avec la surface de roulement 12 avant le décrochage de la remorque. La remorque 1 se trouve supportée par la béquille 25 et les roues 21 (figure 2B).

Le procédé consiste ensuite à faire pivoter le timon 29 de manière que la ou les roulettes 31 viennent en contact avec la surface de roulement 12 pour soulever le châssis 19 de manière qu'en position stable en mode chariot, la remorque 1 se trouve supportée par les roues 21 et la roulette ou les roulettes 31 tandis que la béquille 25 peut pivoter (figure 3B). Pour cela, l'utilisateur agit sur la commande 36 pour déverrouiller le système commandé de blocage 35, en dégageant l'organe d'indexage 35a de son trou d'indexage 35b. La rotation du timon 29 est libérée de sorte que l'utilisateur peut basculer le timon en direction de la remorque. Lors de cette rotation, les roulettes 31 entrent en contact avec la surface de roulement 12 et soulève la remorque dont la plateforme de chargement se replace sensiblement à l'horizontale tandis que la béquille 25 se trouve décollée de la surface de roulement 12. L'organe d'indexage 35a s'engage dans le trou d'indexage 35b correspond au verrouillage du timon 29 dans le mode chariot pour lequel le timon s'élève sensiblement verticalement et la remorque est stabilisée sur ses deux roues 21 et ses deux roulettes 31 (figure 3B). Comme la béquille 25 n'est pas en appui sur la surface de roulement 12, l'utilisateur, sans faire d'efforts importants, peut faire pivoter la béquille 25 pour la positionner dans sa position stable repliée (figure 3C).

Il est à noter que l'utilisateur ne fournit pas d'effort conséquent lors de cette phase de transition, puisqu'il profite du bras de levier octroyé par la longueur du timon, et ne se penche pas pour enclencher la béquille 25. Il peut en outre se servir du frein de parking 29g pour éviter que la remorque ne se déplace d'elle-même lors de l'opération. L'utilisateur peut alors déplacer la remorque en « mode chariot » en utilisant le timon 29. Il lui est possible de la charger, de la décharger, et de l'acheminer aux endroits nécessaires, sans effort conséquent et de manière stable.

La description qui suit décrit la méthode de transformation de la remorque pour passer d'un mode chariot, à un mode remorque à vélo.

Dans son mode chariot, la remorque 1 peut être chargée ou non et déplacée à proximité du vélo 2 auquel elle est destinée à être accrochée. Le procédé consiste à faire pivoter la béquille 25 pour la positionner dans sa position stable déployée (figure 3B) et à faire pivoter le timon 29 de manière que la ou les roulettes 31 ne soient plus en contact avec la surface de roulement et jusqu'à ce que la remorque se trouve supportée par la béquille 25 et les roues 21. Pour ce faire, l'utilisateur agit sur la commande 36 pour déverrouiller le système commandé de blocage 35, en dégageant l'organe d'indexage 35a de son trou d'indexage 35b. La rotation du timon 29 est libérée et le timon se déplie vers l'avant. La remorque 1 tombe naturellement et en douceur sur la béquille 25 par effet de gravité. L'utilisateur baisse alors l'extrémité du timon 29 vers le pivot de rotation de la roue arrière du vélo pour l'attacher au vélo grâce au système d'accrochage 30.

Le procédé vise ensuite à bloquer le timon 29 dans sa position stable en mode remorque à vélo. Dans l'exemple illustré, pour bloquer le timon 29 dans sa position stable en mode remorque à vélo, l'utilisateur soulève la liaison pivot 32 du timon. Ainsi, l'utilisateur soulève d'un petit coup sec, la remorque au niveau de l'articulation du timon, pour que l'organe d'indexage 35a s'engage dans le trou d'indexage 35b correspond au verrouillage du timon 29 dans le mode remorque à vélo (figure 1C).

Le procédé vise ensuite à faire pivoter la béquille 25 pour la positionner dans sa position stable repliée (figure 1A). L'utilisateur replie la béquille par son pied et peut de nouveau utiliser en mode remorque à vélo, le vélo auquel est accrochée la remorque 1.

Selon la description qui précède, la remorque 1 est convertie pour passer d'un mode chariot, à un mode remorque à vélo. Il est à noter qu'il est possible que l'utilisateur souhaite ranger sa remorque à la suite de son utilisation en mode chariot. A cet effet, l'utilisateur fait pivoter la béquille 25 pour la positionner dans sa position stable déployée (figure 3B) et à faire pivoter le timon 29 en direction de la plateforme de chargement de manière que les roulettes 31 ne soient plus en contact avec la surface de roulement et jusqu'à ce que la remorque se trouve supportée par la béquille 25 et les roues 21. Pour ce faire, l'utilisateur agit sur la commande 36 pour déverrouiller le système commandé de blocage 35, en dégageant l'organe d'indexage 35a de son trou d'indexage 35b. La rotation du timon 29 est libérée et un effort de poussée sur le timon entraine son basculement vers l'arrière. La remorque 1 tombe naturellement et en douceur sur la béquille 25 par effet de gravité. Lorsque le timon 29 est poussé pour être suffisamment proche de la plateforme de chargement, l'organe d'indexage 35a s'engage dans le trou d'indexage 35b correspondant au verrouillage du timon 29 dans le mode stable replié (figure 4A). L'utilisateur peut alors basculer la remorque sur l'un de ses côtés et la disposer le long d'un mur ou dans un espace de stockage approprié, en repliant ou non la béquille 25. Il est à noter que le timon 29 peut trouver une ou plusieurs positions stables dans le mode replié, en fonction de l'espace occupé par d'éventuels accessoires (eux-mêmes pliants ou non) installés sur la plateforme de chargement et qui nécessiteraient que le timon soit bloqué avant d'entrer en contact avec la plateforme.

## Revendications

1. Remorque pour vélo utilisable en mode remorque à vélo et en mode chariot, cette remorque (1 ) pour vélo comportant :
- un châssis (19) équipé d'au moins une paire de roues (21) montées en liaison pivot avec le châssis pour rouler sur une surface de roulement, le châssis présentant une plateforme de chargement (22) délimitant un plan d'appui remorque (P_{R});
- une béquille (25) montée sur le châssis (19) pour être déplacée entre une position stable repliée et une position stable déployée pour laquelle les roues (21) et l'extrémité libre (25a) de la béquille (25) définissent un plan d'appui béquille(P_{B});
- un timon (29) présentant une première extrémité pourvue d'un système d'accrochage (30) au vélo et une deuxième extrémité pourvue d'au moins une roulette (31), le timon étant monté par une liaison pivot (32) sur le châssis pour occuper au moins une position stable en mode remorque à vélo et une position stable en mode chariot pour laquelle les roues et la ou les roulettes définissent un plan d'appui timon (P_{T}), le timon (29) étant configuré de manière que, lors de son pivotement pour passer de sa position stable en mode remorque à vélo à sa position stable en mode chariot, la ou les roulettes (31) viennent en contact avec la surface de roulement pour soulever le châssis de manière qu'en position stable en mode remorque, le plan d'appui timon (P_{T}) soit plus éloigné du châssis que le plan d'appui béquille (PB).

2. Remorque pour vélo selon la revendication 1 selon laquelle le timon (29) et la béquille (25) sont configurés de manière qu'en position stable du timon en mode chariot, le plan d'appui timon (P_{T}) et le plan d'appui béquille (P_{B}) forment entre eux un angle strictement supérieur à 0°.

3. Remorque pour vélo selon l'une des revendications 1 ou 2 selon laquelle le timon (29) et la béquille (25) sont configurés de manière qu'en position stable du timon en mode remorque à vélo, le plan d'appui béquille (P_{B}) forme avec la surface de roulement pour la remorque et le vélo, un angle strictement supérieur à 0°.

4. Remorque pour vélo selon l'une des revendications 1 à 3 selon laquelle le timon (29) est monté en liaison pivot sur le châssis (19) pour occuper une position stable repliée contre le châssis.

5. Remorque pour vélo selon l'une des revendications 1 à 4 selon laquelle elle comporte un système commandé de blocage (35) du pivotement du timon (29) piloté par une commande (36) permettant de déverrouiller le timon pour assurer son pivotement et de verrouiller le timon dans au moins la position stable en mode remorque à vélo et la position stable en mode chariot.

6. Remorque pour vélo selon la revendication 5 selon laquelle le timon (29) est monté en liaison pivot sur le châssis (19) pour occuper au moins une position repliée et en ce que le système commandé de blocage (35) du pivotement du timon permettant de déverrouiller le timon pour assurer son pivotement et de verrouiller le timon dans sa position stable repliée.

7. Remorque pour vélo selon l'une des revendications précédentes selon laquelle le timon (29) est pourvu à l'opposé de sa deuxième extrémité, d'une poignée de manipulation (29d).

8. Procédé pour transformer une remorque pour vélo, d'un mode remorque à vélo en un mode chariot, ce procédé visant :
- à mettre à disposition une remorque (1) pour un vélo (2) comportant :
* un châssis (19) équipé d'au moins une paire de roues (21) montées en liaison pivot avec le châssis pour rouler sur une surface de roulement;
* une béquille (25) présentant une extrémité libre (25a) apte à être positionnée à une distance verticale prédéterminée du châssis, cette béquille étant montée sur le châssis pour être déplacée entre une position stable repliée et une position stable déployée pour laquelle les roues et l'extrémité libre de la béquille définissent un plan d'appui béquille (P_{B});
* un timon (29) présentant une première extrémité pourvue d'un système d'accrochage (30) au vélo et une deuxième extrémité pourvue d'au moins une roulette (31), le timon étant monté par une liaison pivot (32) sur le châssis pour occuper au moins une position stable en mode remorque à vélo et une position stable en mode chariot pour laquelle les roues (21) et la ou les roulettes (31) définissent un plan d'appui timon(P_{T}),
- pour passer d'un mode remorque à vélo pour lequel le timon est accroché au vélo tandis que la béquille est dans sa position stable repliée, à un mode chariot :
* à mettre à l'arrêt et à stabiliser le vélo ;
* à déplacer la béquille (25) pour la positionner dans sa position stable déployée;
* à décrocher le timon (29) du vélo de sorte que la remorque est supportée par la béquille (25) et les roues (21);
* à faire pivoter le timon (29) de manière que la ou les roulettes (31) viennent en contact avec la surface de roulement pour soulever le châssis de manière qu'en position stable en mode chariot, la remorque se trouve supportée par les roues (21) et la roulette ou les roulettes (31) tandis que la béquille peut être déplacée;
* à déplacer la béquille (25) pour la positionner dans sa position stable repliée.

9. Procédé selon la revendication précédente selon lequel pour passer une remorque à vélo, d'un mode chariot, à un mode remorque à vélo, le procédé vise :
* à déplacer la béquille (25) pour la positionner dans sa position stable déployée ;
* à faire pivoter le timon (29) de manière que la ou les roulettes (31) ne soient plus en contact avec la surface de roulement et jusqu'à ce que la remorque se trouve supportée par la béquille (25) et les roues (21);
* à bloquer le timon (29) dans sa position stable en mode remorque à vélo;
* à accrocher le timon (29) au vélo;
* et à déplacer la béquille (25) pour la positionner dans sa position stable repliée.

10. Procédé selon la revendication précédente selon lequel pour bloquer le timon (29) dans sa position stable en mode remorque à vélo, on soulève la liaison pivot (32) du timon.
